# EUROPEAN PATENT SPECIFICATION

(11) **EP 0 483 907 B1**
(45) Date of publication and mention of the grant of the patent: **19.07.1995**
(21) Application number: 91202723.2
(22) Date of filing: 22.10.1991
(51) Int. Cl.: A47J 17/18

(54) **Scraper disc**
Raspelscheibe
Disque à râper

(30) Priority: 31.10.1990 NL 9002362
(43) Date of publication of application: 06.05.1992
(73) Proprietor: Philips Electronics N.V., 5621 BA Eindhoven (NL)
(72) Inventor: Mugge, Jan, NL-5656 AA Eindhoven (NL); Pater, Aaldert Jan, NL-5656 AA Eindhoven (NL)
(74) Representative: Bos, Kornelis Sjoerd

(56) References cited:
- BE-A- 901 059
- DE-B- 1 093 058
- DE-B- 1 135 624
- DE-U- 1 900 295
- FR-A- 1 206 134
- FR-A- 2 203 611
- FR-A- 2 502 521
- FR-A- 2 618 998

## Description

The invention relates to a rotatably driven scraper disc with scraper elements for scraping root vegetables, such as potatoes, in a kitchen machine, which disc is provided with a number of slots which run substantially from a central axis of the disc up to the edge of the disc, each scraper element being formed by a wall portion which has a free side adjoining the slot and which is bent out of a disc surface.

A scraper disc as mentioned in the opening paragraph is known from FR-A-2 203 611. The known scraper disc comprises a number of slots, which are bounded by a first bent wall portion having a first edge and by a second bent wall portion having a second edge. The first and second edges are vertically separated over a distance which corresponds to the peeling depth of the known scraper disc. Potatoes scraped with the known scraper disc have a comparatively rough surface, so that their appearance is not particularly attractive.

The invention has for its object to provide a scraper disc whereby the surface of a potato after scraping is at least reasonably smooth.

The scraper disc according to the invention is characterized in that an edge of said free side of the wall portion, which is closest to said disc surface, lies approximately at the level of said disc surface.

Preferably, each scraper element encloses an angle of between 20° and 70° with a radial line through a point of the scraper element which is situated closest to the central axis. The potatoes are more effectively forced to rotate in all directions during scraping by this, which shortens the scraping process.

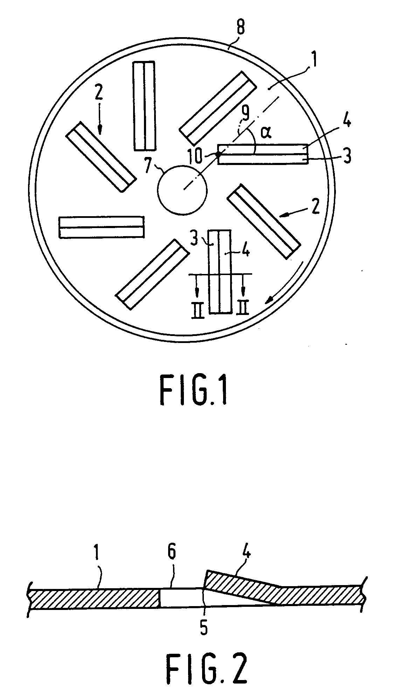

The invention will be explained in more detail below with reference to a drawing in which
Fig. 1 is a plan view of a scraper disc according to the invention, and
Fig. 2 is a cross-section on an enlarged scale through a scraper element of the scraper disc of Fig. 1.

The scraper disc 1 is provided with a number of scraper elements 2 (for example, eight), which are obtained by first stamping slots 3 into a disc-shaped metal plate, after which the rear wall portion 4 of each slot seen in the direction of rotation of the disc is bent upwards. The wall portion 4 is bent upwards so far that the lower edge 5 of the wall portion lies approximately at the level of the disc surface 6. The scraper elements are elongate and extend substantially from the axis 7 of the disc up to the circumferential edge 8 of the disc.

It was found to be advantageous, furthermore, not to have the scraper elements 2 run in radial direction, but to have them enclose an angle with the radius, i.e. each scraper element encloses an angle α of between 20° and 70° with a radial line 9 through a point 10 of the scraper element which is closest to the axis 7. It is found that the potatoes will more effectively revolve in all directions as a result, so that the potatoes are scraped within a shorter period. Good results are obtained with an angle of approximately 35°.

## Claims

1. A rotatably driven scraper disc (1) with scraper elements (2) for scraping root vegetables, such as potatoes, in a kitchen machine, which disc (1) is provided with a number of slots (3) which run substantially from a central axis (7) of the disc (1) up to the edge (8) of the disc (1), each scraper element (2) being formed by a wall portion (4) which has a free side adjoining the slot (3) and which is bent out of a disc surface (6), characterized in that an edge (5) of said free side of the wall portion (4), which is closest to said disc surface (6), lies approximately at the level of said disc surface (6).

2. A scraper disc as claimed in Claim 1,
characterized in that each scraper element (2) encloses an angle (α) of between 20° and 70° with a radial line (9) through a point (10) of the scraper element which is situated closest to the axis (7).

## Patentansprüche

1. Drehbar angetriebene Raspelscheibe (1) mit Raspelelementen (2) zum Raspeln von Wurzelgemüse wie Kartoffeln in einer Küchenmaschine, welche Scheibe (1) mit einer Anzahl im wesentlichen von einer Zentralachse (7) der Scheibe (1) bis zur Kante (8) der Scheibe (1) verlaufender Schlitze (3) versehen ist, wobei jedes Raspelelement (2) von einem aus einer Scheibenoberfläche (6) herausgebogenen Wandteil (4) mit einer neben dem Schlitz (3) gelegenen freien Seite gebildet wird, dadurch gekennzeichnet, daß eine Kante (5) der obiger Scheibenoberfläche (6) am nächsten gelegenen obigen freien Seite des Wandteils (4) ungefähr in Höhe dieser Scheibenoberfläche (6) liegt.

2. Raspelscheibe nach Anspruch 1, dadurch gekennzeichnet, daß jedes Raspelelement (2) einen Winkel (α) von 20° bis 70° zu einer Radiallinie (9) durch einen der Achse (7) nächstgelegenen Punkt (10) des Raspelelements bildet.

## Revendications

1. Disque à râper entraîné en rotation (1) comportant des éléments râpeurs (2) destinés à râper des légumes-racines tels que des pommes de terre, dans un robot de cuisine, ce disque (1) étant pourvu d'une pluralité de découpes (3) qui s'étendent en substance depuis un axe central (7) du disque (1) jusqu'au bord (8) du disque (1), chaque élément râpeur (2) étant formé par une partie de paroi (4) qui présente un côté libre avoisinant la découpe (3) et qui est infléchie à l'écart d'une surface de disque (6), caractérisé en ce qu'une arête (5) du côté libre de la partie de paroi (4), qui est la plus proche de la surface (6) du disque, est située approximativement au niveau de la surface (6) du disque.

2. Disque à râper suivant la revendication 1, caractérisé en ce que chaque élément râpeur (2) forme un angle (α) compris entre 20° et 70° avec une ligne radiale (9) passant par un point (10) de l'élément râpeur qui est le plus proche de l'axe (7).
